# EUROPÄISCHE PATENTSCHRIFT

(11) **EP 3 592 498 B1**
(45) Veröffentlichungstag und Bekanntmachung des Hinweises auf die Patenterteilung: **17.03.2021**
(21) Anmeldenummer: 18701145.7
(22) Anmeldetag: 18.01.2018
(51) Int. Cl.: B23K 20/10, H01R 43/02

(54) **ULTRASCHALLSCHWEISSVORRICHTUNG UND VERFAHREN ZUM ULTRASCHALLSCHWEISSEN**
ULTRASONIC WELDING APPARATUS AND ULTRASONIC WELDING METHOD
DISPOSITIF DE SOUDAGE PAR ULTRASONS ET PROCÉDÉ DE SOUDAGE PAR ULTRASONS

(30) Priorität: 06.03.2017 DE 102017104615
(43) Veröffentlichungstag der Anmeldung: 15.01.2020
(73) Patentinhaber: Auto-Kabel Management GmbH, 79688 Hausen i.W. (DE)
(72) Erfinder: SCHARKOWSKI, Oliver, 03046 Cottbus (DE)
(74) Vertreter: Cohausz & Florack
(86) Internationale Anmeldenummer: PCT/EP2018/051190
(87) Internationale Veröffentlichungsnummer: WO 2018/162128

(56) Entgegenhaltungen:
- CN-A- 1 701 943
- DE-C1- 3 745 065
- US-A1- 2015 128 772
- Telsonic: "POWERWHEEL - Metallschweissen in einer neuen Dimension | TELSONIC Ultrasonics", , 7. Juli 2016 (2016-07-07), XP055469507, Gefunden im Internet: URL:https://web.archive.org/web/2016070707 4707/https://www.telsonic.com/de/produktsp ektrum/powerwheel-metallschweissen/ [gefunden am 2018-04-23]

## Beschreibung

Der Gegenstand betrifft eine Ultraschallschweißvorrichtung sowie ein Verfahren zum Ultraschallschweißen.

Das Fügen von Bauteilen mittels Ultraschall ist aus dem Stand der Technik bekannt (siehe, zum Beispiel, DE 37 45 065 C1).

Insbesondere bei Verbindungen mit Aluminium ist die Verwendung eines Ultraschallschweißverfahrens vorteilhaft, da beim Schweißen mit Ultraschall eine Aluminiumoxidschicht aufgebrochen wird. Durch den zunehmenden Einsatz von Aluminiumlitzenleitungen in automotiven Anwendungen wird auch dort das Ultraschallschweißen immer beliebter.

Beim Ultraschallschweißen werden die Werkstücke, insbesondere eine Litzenleitung und ein Anschlussteil, mittels einer Sonotrode und einem Amboss aufeinander gedrückt. Der Amboss als passives Werkzeug dient insbesondere zusammen mit Niederhaltern dabei als Auflager und zum Fixieren und/oder Niederhalten eines ersten Werkstücks. Die Sonotrode als aktives Werkzeug drückt das zweite Werkstück gegen das erste Werkstück und bringt eine Ultraschallschwingung in die Werkstücke ein. Durch die über die Sonotrode eingebrachte Ultraschallschwingung entsteht an der Verbindungsstelle zwischen den Werkstücken, z.B. dem Litzenleiter und dem Anschlussteil, die benötigte Schweißenergie, um deren Fügepartner aufzuschmelzen und die Werkstücke stoffschlüssig miteinander zu verbinden.

Nachteilig bei dem Verfahren nach dem Stand der Technik ist jedoch, dass lediglich die Sonotrode als aktives Werkzeug Schweißenergie in die zu fügenden Materialien einbringt. Der Amboss ist regelmäßig als passives Werkzeug statisch gelagert und führt beim Ultraschallschweißen keine eigene Bewegung durch. Dies führt dazu, dass die Sonotrode Schweißenergie nur einseitig in die zu fügenden Materialien einbringt. Dieser jedoch nur einseitige Energieeintrag kann, insbesondere beim Verschweißen von Litzenleitungen, insbesondere bei größeren Querschnitten, zur Folge haben, dass die in Kontakt mit der Sonotrode stehenden Litzen der Litzenleitung beschädigt werden. Die äußeren Litzen der Litzenleitung, die als Koppelfläche für den Energieeintrag dienen, können bei dem Verfahren gemäß Stand der Technik beschädigt werden. Dies führt zu dem Nachteil, dass Litzenleitungen nur mit geringeren Querschnitten mittels Ultraschall beschädigungsfrei verschweißt werden können. Litzenleitungen mit größeren Querschnitten, beispielsweise über 16 mm² können gegebenenfalls beschädigt werden, insbesondere wenn höhere Schweißenergie in die erste Litzenlage eingebracht wird. Insbesondere beim Fügen von Litzenleitungen mit größeren Querschnitten kann somit die benötigte mechanische Festigkeit der stoffschlüssigen Verbindung nicht mehr gewährleistet werden.

Aus diesem Grunde lag dem Gegenstand die Aufgabe zugrunde, eine Ultraschallschweißvorrichtung sowie ein Verfahren zum Ultraschallschweißen zur Verfügung zu stellen, welches prozesssicher Verbindungen von Litzenleitungen größeren Querschnitts mit Anschlussteilen ermöglichen.

Diese Aufgabe wird durch eine Ultraschallschweißvorrichtung nach Anspruch 1 sowie ein Verfahren nach Anspruch 7 gelöst.

Der Erfinder hat überraschenderweise erkannt, dass ein Bearbeiten mittels Ultraschall insbesondere bei Litzenleitungen, insbesondere aus Aluminiumwerkstoff, mit Querschnitten größer 16 mm², insbesondere größer 50 mm², vorzugsweise bis 200 mm², ein dynamisches Gegenlager zu der Sonotrode vorteilhaft ist. Es ist erkannt worden, dass durch die dynamische Lagerung des Gegenlagers eine Schwingung des Gegenlagers parallel zu einer Schwingungsebene der Sonotrode ermöglicht wird. Durch die Möglichkeit des Gegenlagers, sich in einer Ebene parallel zur Schwingungsebene der Sonotrode zu bewegen, insbesondere zu schwingen, ergeben sich signifikante Vorteile gegenüber einer statischen Anordnung des Gegenlagers, wie sie aus dem Stand der Technik bekannt ist. Durch die dynamische Lagerung des Gegenlagers werden Verbindungen mit höheren mechanischen Festigkeiten bei kürzeren Prozesszeiten ermöglicht. Es ist erkannt worden, dass durch die dynamische Lagerung des Gegenlagers bei gleich hohem Energieeintrag mittels der Sonotrode die mechanische Festigkeit der Fügestelle zwischen den zu fügenden Teilen erhöht wird. Dies führt dazu, dass der Energieaufwand pro Fügestelle gesenkt und somit die Energiekosten verringert werden können und gleichzeitig die Fügequalität gleichbleibend gegenüber dem Stand der Technik ist.

Mit Hilfe des beweglich gelagerten Gegenlagers ist es möglich, die von der Sonotrode in das Werkstück eingekoppelten Ultraschallwellen auch in das Gegenlager einzukoppeln. Die Schwungmasse des Gegenlagers, die durch die gekoppelten Schallwellen der schwingenden Sonotrode angeregt wird, kann durch eine dynamische Lagerung des Gegenlagers in der Schwingungsebene der Sonotrode in Bewegung versetzt werden und deren kinetische Energie kann in die Fügezone eingebracht werden.

Die von der Sonotrode in das System eingekoppelte Schwingungsenergie erzeugt in dem dynamisch gelagerten Gegenlager eine Auslenkung. Diese Auslenkung kann entsprechend der Auslenkung der Sonotrode periodisch sein. Ferner erfolgt die Auslenkung in der Schwingungsrichtung / ebene der Sonotrode, insbesondere in der Horizontalrichtung / ebene in Schwingungsrichtung der Sonotrode. Die beschriebenen Effekte treten natürlich nur bei aktivierter Sonotrode auf, also während des Schweißprozesses. Durch die Schwingung des Gegenlagers wird die kinetische Energie in das Werkstück rückgekoppelt, so dass eine gleichmäßige Einkopplung von Schweißenergie in das Werkstück ermöglicht ist.

Da das Gegenlager eine mechanische Trägheit besitzt, erfolgt die Schwingung des Gegenlagers mit einer Phasendifferenz bzw. einem Gangunterschied, so dass durch geeignete Einstellung von Prozessparametern eine entgegengesetzte Auslenkung des Gegenlagers zu der Sonotrode ermöglicht wird.

Beispielsweise beim Verschweißen eines Litzenleiters, insbesondere aus einem Aluminiumwerkstoff mit einem Anschlusselement führt die Schwingung des Gegenlagers zu einer zusätzlichen hochfrequenten Reibung im Schweißbereich zwischen dem Litzenleiter und dem Anschlusselement. Die Schweißenergie wird somit durch die aktiv schwingende Sonotrode auf der Litzenoberseite und das dadurch angeregte Gegenlager auf der Litzenunterseite über das Naschlusselement in die Fügezone zwischen den Werkstücken eingebracht.

Das Gegenlager kann auf der Oberfläche, auf dem das Werkstück gelagert wird, eine reibungserhöhende Oberfläche aufweisen. Dies kann z.B. durch ein mechanisches Aufrauen, z.B. durch Einbringen einer Linierung oder Rautierung erfolgen

In einem alternativen Ausführungsbeispiel, welches nicht unter den Gegenstand der Erfindung fällt, wird vorgeschlagen, dass das Gegenlager eine Sonotrode ist. Ein Amboss kann als passives Bauteil lediglich durch die Sonotrode angeregt werden. Auch ist es möglich, anstelle eines passiven Gegenlagers ein aktives Gegenlager in der Form einer Sonotrode zu bilden. Die beiden Sonotroden können jeweils über einen Konverter und vorzugsweise einen Booster angetrieben werden. Eine regelungstechnische Kopplung der beiden Konverter kann derart sein, dass die Schwingungen von Sonotrode und Gegenlager gegenläufig sind. Insbesondere kann die Schwingung derart sein, dass die Schwingungen einen Gangunterschied zwischen einer viertel- bis einer halben Wellenlänge aufweisen. Insbesondere kann der Gangunterschied in etwa eine halbe Wellenlänge aufweisen. Der Phasenunterschied kann dabei zwischen 90° und 270°, vorzugsweise zwischen 120° und 240°, insbesondere zwischen 170° und 190°, bevorzugt in etwa 180° betragen.

Gemäß einem Ausführungsbeispiel wird vorgeschlagen, dass eine Befestigungsvorrichtung an dem Gegenlager angeordnet ist. Mit Hilfe der Befestigungsvorrichtung lässt sich das Werkstück, insbesondere ein Anschlussteil an dem Gegenlager mechanisch fixieren. Die Befestigungsvorrichtung ist ortsfest zu dem Gegenlager und wird somit zusammen mit dem Gegenlager in Schwingung versetzt.

Auch ist es möglich, dass die Befestigungsvorrichtung unabhängig von dem Gegenlager fest oder dynamisch gelagert ist. Die Befestigungsvorrichtung kann wie das Gegenlager dynamisch gelagert sein und durch die Schwingung der Sonotrode ebenfalls in Schwingung versetzt werden. Dann kann die Befestigungsvorrichtung mit dem am Gegenlager niedergehaltenen Werkstück schwingen. Auch kann die Befestigungsvorrichtung fixiert sein und gegenüber der Sonotrode fest gelagert sein. Ein Werkstück kann z.B. aufgrund einer glatten Oberfläche der Befestigungsvorrichtung in der Art eines Gleitlagers durch die Befestigungsvorrichtung gehalten sein.

Gemäß einem Ausführungsbeispiel wird vorgeschlagen, dass das Gegenlager in einer Linearführung geführt ist. Insbesondere eignet sich hier eine lineare Schlittenführung. Dies bewirkt, dass das Gegenlager in den Freiheitsgraden seiner Bewegung eingeschränkt ist. Insbesondere ist das Gegenlager translatorisch mit einem Freiheitsgrad von 1 gelagert. Die Richtung des Freiheitsgrade3s bzw. die Richtung dieser translatorischen Bewegung ist vorzugsweise parallel zu der Bewegungsrichtung der Sonotrode.

Die Erregung des Gegenlagers lässt sich beispielsweise durch verstellbare Dämpfungselemente einstellen. Ein Dämpfungselement kann vorgesehen sein, welches in seinem Dämpfungsverhalten einstellbar ist, insbesondere dessen Federkonstante einstellbar ist. Gemäß einem Ausführungsbeispiel wird vorgeschlagen, dass ein Dämpfungselement die Bewegung des Gegenlagers parallel zu der Schwingungsebene der Sonotrode dämpft. Auch ist es möglich, dass die Dämpfung des Dämpfungselementes, insbesondere die Federkonstante, gesteuert oder geregelt wird.

Durch die Dämpfungselemente wird eine Dämpfung des Gegenlagers bewirkt. Dies verhindert, dass das Gegenlager gegebenenfalls in Resonanz gerät. Vorgeschlagen wird, dass das Dämpfungselement einen Dämpfungsgrad D des Gegenlagers von 0<D≤1 bewirkt.

Gemäß einem Ausführungsbeispiel wird vorgeschlagen, dass das Gegenlager derart gelagert ist, dass beim Schweißen seine Bewegungsrichtung der Bewegungsrichtung der Sonotrode entgegengesetzt ist.

Gemäß einem Ausführungsbeispiel wird vorgeschlagen, dass das Gegenlager derart gelagert ist, dass seine Schwingung einen Gangunterschied von in etwa einer halben Wellenlänge zu der Schwingung der Sonotrode aufweist.

Vorstellbar ist auch das Schwingungsverhalten vom Gegenlager über seine Masse zu optimieren, in dem die geometrische Abmaße oder Masseanlagerungen variiert werden, z.B. ein Kern aus Blei vorgesehen wird werden. Insbesondere kann die Dichteverteilung in dem Gegenlager ungleichmäßig sein. Insbesondere kann ein Kern des Gegenlagers aus einem Material mit einer anderen Dichte sein, als eine äußere Schicht, insbesondere als die die Oberfläche für das Werkstück bildende Schicht.

Das hier beschreibene Ultraschallschweißen kann ein longitudinales Ultraschallschweißen, ein torsionales Ultraschallschweißen oder Ultraschallwalzschweißen sein. Die Lagerung des Gegenlagers ist dabei vorzugsweise gleich der Bewegungsrichtung der Sonotrode. Im Falle des vtorsionalen Ultraschallschweißen oder Ultraschallwalzschweißen kann das Gegenlager drehbar gelagert sein, um so die Drehung des Sonotrode nachzubilden.

Ein weiterer Aspekt kann eine Messung der Schwingung des Gegenlagers sein. Die Schwingung des Gegenlagers kann optisch und/oder elektrisch, elektronisch erfasst werden. So kann z.B. über eine Lasermessung die Bewegung des Gegenlagers gemessen werden. Hierbei kann ein fester Punkt (Markierung) am Gegenlager durch einen Laser in seiner Auslenkung gemessen werden. Auch kann über Abstandssensoren die Bewegung gemessen werden. Die gemessene Schwingung kann in ein Verhältnis mit der eingebrachten Schwingung gestellt werden. Insbesondere kann die Amplitude des Gegenlagers zu der eingebrachten Schweißenergie der Sonotrode gebracht werden. Hieraus können Rückschlüsse auf die mechanische Kopplung zwischen Gegenlager und Sonotrode während des Schweißprozesses gezogen werden. Dies kann für eine Bewertung der Schweißqualität verwendet werden. Diese Messung lässt sich mit allen hier beschriebenen Merkmalen kombinieren.

Nachfolgend wird der Gegenstand anhand einer Ausführungsbeispiele zeigenden Zeichnung näher erläutert. In der Zeichnung zeigen:
- Fig. 1a: eine Seitenansicht eines schwingend gelagerten Gegenlagers;
- Fig. 1b: eine Draufsicht auf das Gegenlager gemäß der Fig. 1a;
- Fig. 2: eine schematische Ansicht einer Schweißvorrichtung mit einem passiven Gegenlager;
- Fig. 3: eine schematische Ansicht einer Schweißvorrichtung mit einem aktiven Gegenlager.

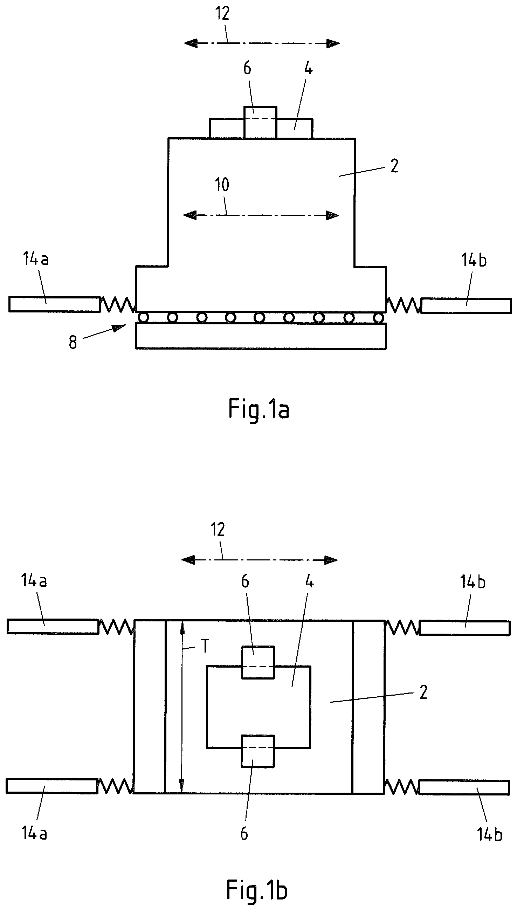

Fig. 1a zeigt ein als Amboss gebildetes Gegenlager 2. Das Gegenlager 2 ist als Auflagefläche für ein Anschlussteil 4 vorgesehen. Das Anschlussteil 4 wird mit Befestigungsmitteln 6, welche ortsfest an dem Gegenlager 2 angeordnet sind, gehalten. Die Befestigungsmittel 6 können dabei beispielsweise Klammern, Haken oder sonstige geeignete Mittel sein, die ein Anschlussteil 4 ortsfest am Gegenlager 2 befestigen können.

Ferner ist in der Fig. 1a zu erkennen, dass das Gegenlager 2 auf einer Wälzführung 8, beispielsweise einer Linearführung bzw. einer Schienenführung gelagert ist. Die Lagerung auf der Wälzführung 8 ist derart, dass die Bewegung des Gegenlagers 2 genau einen Freiheitsgrad hat, der entlang der Achse 10 verläuft. Die Achse 10 verläuft dabei im Wesentlichen parallel zu der Achse der Schwingungsrichtung 12, mit welcher eine Sonotrode schwingt.

Um ein Überschwingen des Gegenlagers 2 zu verhindern, sind an dem Gegenlager 2 Dämpfungselemente 14a, 14b vorgesehen. Die Dämpfungselemente 14a, 14b können feste als auch variabel einstellbare Federkonstanten aufweisen. Auch ist es möglich, dass die Dämpfungseigenschaften, insbesondere die Federkonstante der Dämpfungselemente 14, steuerbar oder regelbar sind. Der Dämpfungsgrad des Systems aus Dämpfungselementen 14 und Gegenlager 2 sowie Wälzführung 8 ist dabei vorzugsweise größer 0 und kleiner gleich 1.

Fig. 1b zeigt das Gegenlager 2 in einer Draufsicht. Zu erkennen ist, dass die Dämpfungselemente 14a, 14b möglichst symmetrisch zueinander entlang einer Symmetrieebene senkrecht zur Schwingungsrichtung der Sonotrode entlang der Achse 12 angeordnet sind. Dies führt dazu, dass die Auslenkung des Gegenlagers 2 in Richtung der Achse 10 möglichst über dessen gesamte Tiefe T gleichmäßig ist.

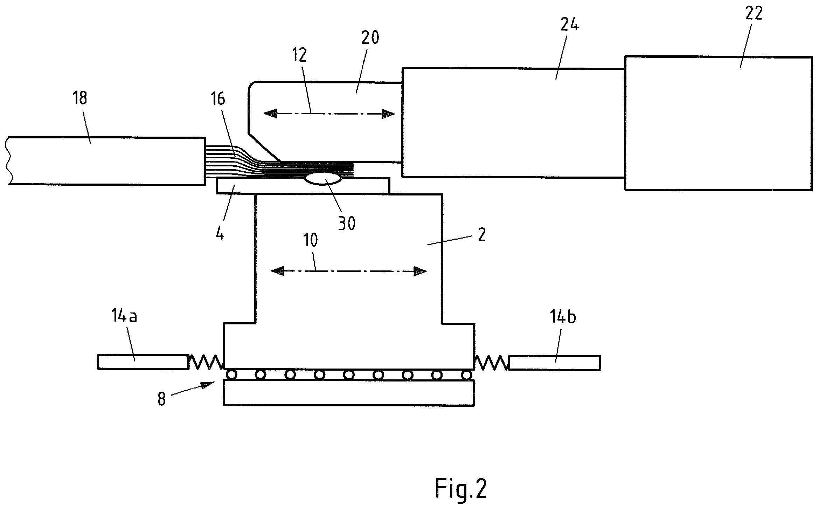

Zum Verschweißen eines Anschlussteils 4 mit einer Litzenleitung 16 eines Kabels 18 werden diese Werkstücke zwischen einer Sonotrode 20 und dem Gegenlager 2 wie in Fig. 2 dargestellt, eingespannt.

In Fig. 2 ist das Gegenlager 2 entsprechend den Ausführungen gemäß den Figuren 1a und b gelagert. Das Anschlussteil 4 wird auf der der Sonotrode 20 zugewandten Oberfläche des Gegenlagers 2, welches hier ein Amboss ist, befestigt. Hierzu wird es mittels Befestigungsmittel 6 auf der der Sonotrode 20 zugewandten Oberfläche fixiert.

Anschließend wird eine Litzenleitung 16 vorzugweise an einem abisolierten Ende eines Kabels 18 auf das Anschlussteil 4 aufgelegt und die Sonotrode 20 presst die Litzenleitung 16 auf das Anschlussteil 4.

Zum Verschweißen wird nun die Sonotrode 20 in Schwingung versetzt, so dass die Sonotrode 20 entlang der Achse 12 schwingt. Hierzu ist ein Konverter 22 und ein Booster 24 vorgesehen.

Während des Schweißvorgangs wird die Schwingung entlang der Achse 12 durch die Sonotrode 20 in die Fügestelle zwischen dem Anschlussteil 4 und der Litzenleitung 16 eingebracht.

Dadurch, dass das Gegenlager 2 schwingend gelagert ist, wird das Gegenlager 3 entlang der Achse 10 ebenfalls in Schwingung versetzt. Dies führt dazu, dass nicht nur die Sonotrode 20 eine lineare Auslenkung erfährt, sondern auch das Gegenlager 2. Diese beiden linearen Auslenkungen führen dazu, dass die Schweißenergie nicht nur auf der der Sonotrode 20 zugewandten Seite des Litzenleiters 16 in die Fügestelle 30 zwischen dem Litzenleiter 16 und das Anschlussteil 4 eingebracht wird, sondern auch auf der Unterseite, auf der dem Anschlussteil 4 zugewandten Seite des Litzenleiters 16. Das Anschlussteil 4 wird samt Gegenlager 2 in Schwingung versetzt und führt daher ebenfalls zu einem Eintrag von Schweißenergie in die Fügestelle 30 zwischen dem Anschlussteil 4 und der Litzenleitung 16.

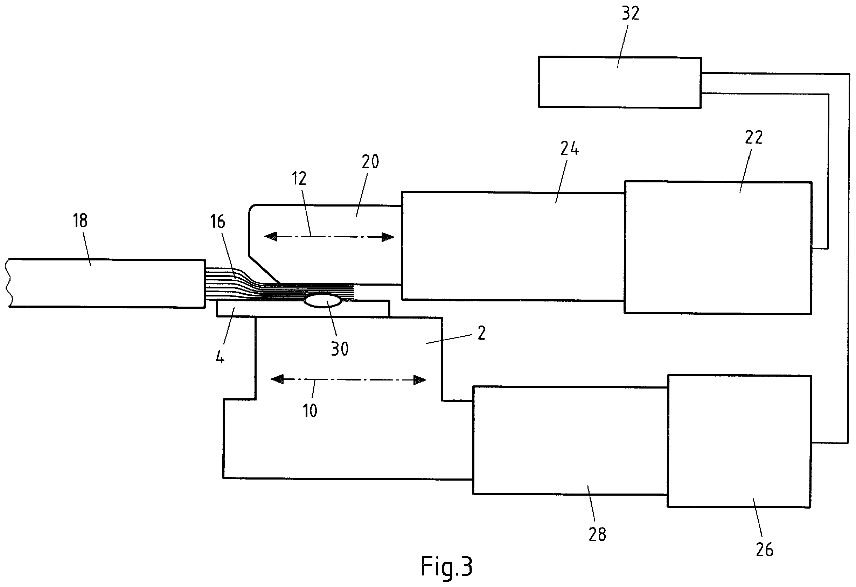

Fig. 3 zeigt ein zu der Fig. 2 ähnliches System, welches nicht unter den Gegenstand der Erfindung fällt, wobei gleiche Bezugszeichen gleiche Elemente zeigen. Im Gegensatz zu der Fig. 2 ist das Gegenlager 2 kein passiver Amboss, sondern eine aktiv betriebene Sonotrode. Auch diese Sonotrode 2 wird über einen Konverter 26 und einen Booster 28 betrieben. An dem Gegenlager 2 ist entsprechend der Fig. 2 ebenfalls das Anschlussteil 4 ortsfest fixiert. Hierauf aufgebracht ist die Litzenleitung 16 des Kabels 18. Zwischen der Litzenleitung 16 und dem Anschlussteil 4 bildet sich im Bereich der Sonotrode 20 und dem Gegenlager 2 die Fügezone 30. Die Achsen 10 und 12 verlaufen auch bei dem System gemäß der Fig. 3 parallel zueinander.

Die Bewegung entlang der Achsen 10 und 12 für die Sonotrode 20, respektive das Gegenlager 2 wird über eine Steuervorrichtung 32 gesteuert. Hierbei kann die Steuervorrichtung 32 die Bewegung derart ansteuern, dass die Bewegungen von Gegenlager 2 und Sonotrode 2 entlang ihrer jeweiligen Bewegungsachsen 10, 12 gegenläufig sind. Insbesondere ist ein Gangunterschied zwischen den Schwingungen zwischen einem viertel- und einer halben Wellenlänge bzw. ist die Phasendifferenz zwischen den Schwingungen zwischen 90 und 270°, vorzugsweise zwischen 120° und 240°, insbesondere zwischen 170 und 190°. Insbesondere ist die Phasendifferenz der Schwingungen in etwa 180°. Durch diese gegenläufigen Schwingungen wird die Schweißenergie optimal durch die Sonotrode 20 und das Gegenlager 2 in die Fügezone 30 eingebracht.

Versuche haben gezeigt, dass bei kürzeren Schweißzeiten höhere Zugfestigkeiten der Verbindungen erzielt werden. Dies führt dazu, dass für eine gleiche Zugfestigkeit gegenüber herkömmlichen Schweißvorrichtungen nur eine geringere Schweißzeit notwendig ist. Die Zugfestigkeit bei gleicher Schweißzeit ist gegenüber herkömmlichen Schweißvorrichtungen um bis zu 100 % erhöht.

Auch haben Versuche gezeigt, dass durch das Einbringen von Schweißenergie auf beiden Seiten der Fügestelle, also durch die Sonotrode und das Gegenlager, die Beschädigung an den Litzen der Litzenleitung verringert oder vermieden werden kann. Die Sonotrode kann mit einer geringeren Leistung betrieben werden, so dass diese die oberste Litzenlage nicht beschädigt.

Auch ist durch das dynamisch gelagerte Gegenlager eine Messung der Schwingung am Gegenlager möglich. Diese Messung ermögliche einen Rückschluss auf den Schweißprozess und mithin auf die Qualität der Schweißverbindung.

Die gegenständliche Schweißvorrichtung ermöglicht ein besonders gleichmäßiges Einbringen der Schweißenergie in die Fügestelle durch das beidseitige Aufbringen von Schwingungen auf den Litzenleiter, sowohl von der dem Anschlussteil abgewandten Seite, als auch von der dem Anschlussteil zugewandten Seite des Litzenleiters.

Dadurch wird der Litzenleiter weniger beschädigt und die eingebrachte Schweißenergie verteilt sich gleichmäßiger über die Fügestelle.

### Bezugszeichenliste

- 2: Gegenlager
- 4: Anschlussteil
- 6: Befestigungsmittel
- 8: Wälzführung
- 10: Achse
- 12: Achse
- 14: Dämpfungselement
- 16: Litzenleiter
- 18: Kabel
- 20: Sonotrode
- 22: Konverter
- 24: Booster
- 26: Konverter
- 28: Booster
- 30: Fügezone
- 32: Steuerung

## Patentansprüche

1. Ultraschallschweißvorrichtung umfassend:
- eine Sonotrode (20),
- ein der Sonotrode (20) gegenüberliegendes Gegenlager (2), wobei
- das Gegenlager (2) parallel zu einer Schwingungsrichtung (12) der Sonotrode (20) beweglich gelagert ist
**dadurch gekennzeichnet,**
- **dass** das Gegenlager (2) derart dynamisch gelagert ist, dass es durch von der aktivierten Sonotrode (20) eingekoppelte Schwingungsenergie periodisch auslenkbar ist und, dass die kinetische Energie während eines Schweißprozesses durch die Schwingung des Gegenlagers in das Werkstück rückgekoppelt werden kann.

2. Ultraschallschweißvorrichtung nach Anspruch 1, **dadurch gekennzeichnet,**
- **dass** an dem Gegenlager (2) eine Befestigungsvorrichtung (6) für ein Werkstück (18) befestigt ist.

3. Ultraschallschweißvorrichtung nach einem der vorangehenden Ansprüche, **dadurch gekennzeichnet,**
- **dass** das Gegenlager (2) in einem Gleitlager oder einer Linearführung geführt ist.

4. Ultraschallschweißvorrichtung nach einem der vorangehenden Ansprüche, **dadurch gekennzeichnet,**
- **dass** das Gegenlager (2) translatorische mit einem Freiheitsgrad von 1 gelagert ist, wobei die Richtung der translatorischen Bewegung des Gegenlagers (2) parallel zu der Bewegung der Sonotrode (20) ist.

5. Ultraschallschweißvorrichtung nach einem der vorangehenden Ansprüche, **dadurch gekennzeichnet,**
- **dass** die Ultraschallschweißvorrichtung weiter ein Dämpfungselement (14) aufweist, welches eingerichtet ist, die Bewegung des Gegenlagers (2) parallel zu der Schwindungsebene der Sonotrode (20) zu dämpfen.

6. Ultraschallschweißvorrichtung nach einem der vorangehenden Ansprüche, **dadurch gekennzeichnet,**
- **dass** eine Messvorrichtung zur Messung der Auslenkung des Gegenlagers (2) beim Schweißvorgang vorgesehen ist.

7. Verfahren zum Verschweißen eines Anschlussteils mit einem Litzenleiter mit einer Ultraschallschweißvorrichtung nach Anspruch 1 bei dem
- das Anschlussteil auf dem Gegenlager befestigt wird,
- der Litzenleiter auf das Anschlussteil aufgelegt wird,
- die Sonotrode auf den Litzenleiter gedrückt wird und
die Sonotrode eine Ultraschallschwingung senkrecht zur Flächennormalen des Anschlussteils in den Litzenleiter einleitet, wobei das Gegenlager in einer zur Schwingungsrichtung der Sonotrode parallelen Schwingungsrichtung relativ zur Sonotrode schwingt.

## Claims

1. Ultrasonic welding device comprising:
- a sonotrode (20),
- a counterbearing (2) opposite the sonotrode (20), wherein
- the counterbearing (2) is movably mounted parallel to a direction of oscillation of the sonotrode (20),
**characterized in that**
- the counterbearing (2) is mounted dynamically such that it is periodically elongated by the oscillation energy coupled in by the activated sonotrode (20), and
that the kinetic energy can be fed back by the oscillation of the counterbearing into the work piece during the welding process.

2. Ultrasonic welding device according to claim 1,
**characterized in that**
- a fastening device (6) for a workpiece (18) is fastened to the counterbearing (2).

3. Ultrasonic welding device according to one of the preceding claims, **characterized in that**
- the counterbearing (2) is guided in a plain bearing or a linear bearing.

4. Ultrasonic welding device according to one of the preceding claims, **characterized in that**
- the counterbearing (2) is mounted with a translatory degree of freedom of 1, the direction of the translatory movement of the counterbearing (2) being parallel to the movement of the Sonotrode (20).

5. Ultrasonic welding device according to one of the preceding claims, **characterized in that**
- the ultrasonic welding device further comprises a damping element (14) which is arranged to dampen the movement of the counterbearing (2) parallel to the oscillation plane of the Sonotrode (20).

6. Ultrasonic welding device according to one of the preceding claims, **characterized in that**
- a measuring device is provided for measuring the deflection of the counterbearing (2) during the welding process.

7. Method for welding a connecting part with a stranded conductor using an ultrasonic welding device according to claim 1 in which
- the connecting part is fastened to the counterbearing,
- the stranded wire is placed on the connecting part,
- the sonotrode is pressed onto the stranded conductor and
the sonotrode introduces an ultrasonic oscillation perpendicular to the surface normal of the connecting part into the stranded conductor, the counterbearing oscillating relative to the sonotrode in a direction of oscillation parallel to the direction of oscillation of the Sonotrode.

## Revendications

1. Dispositif de soudage par ultrasons comprenant :
- une sonotrode (20),
- un contre-palier (2) opposé à la sonotrode (20),
- où le contre-palier (2) est monté de façon mobile parallèlement à une direction
d'oscillation (12) de la sonotrode (20),
**caractérisé**
- **en ce que** le contre-palier (2) est monté dynamiquement de telle sorte qu'il peut être périodiquement dévié par l'énergie vibratoire couplée par la sonotrode activée (20) et
- **en ce que** l'énergie cinétique peut être réinjectée dans la pièce pendant un processus de soudage par la vibration du contre-palier.

2. Dispositif de soudage par ultrasons selon la revendication 1,
**caractérisé**
- **en ce qu'**un dispositif de fixation (6) pour une pièce (18) est fixé au contre-palier (2).

3. Dispositif de soudage par ultrasons selon l'une des revendications précédentes,
**caractérisé**
- **en ce que** le contre-palier (2) est guidé dans un palier lisse ou un guide linéaire.

4. Dispositif de soudage par ultrasons selon l'une des revendications précédentes,
**caractérisé**
- **en ce que** le contre-palier (2) est monté en translation avec un degré de liberté de 1, la direction du mouvement de translation du contre-palier (2) étant parallèle au mouvement de la sonotrode (20).

5. Dispositif de soudage par ultrasons selon l'une des revendications précédentes,
**caractérisé**
- **en ce que** le dispositif de soudage par ultrasons comprend en outre un élément d'amortissement (14) qui est agencé pour amortir le mouvement du contre-palier (2) parallèlement au plan d'oscillation de la sonotrode (20).

6. Dispositif de soudage par ultrasons selon l'une des revendications précédentes,
**caractérisé**
- **en ce qu'**un dispositif de mesure est prévu pour mesurer la déflexion du contre-palier (2) pendant le processus de soudage.

7. Procédé de soudage d'une pièce de connexion à un conducteur toronné avec un dispositif de soudage par ultrasons selon la revendication 1, dans lequel
- la pièce de connexion est fixée sur le contre-palier,
- le conducteur toronné est placé sur la pièce de raccordement,
- la sonotrode est pressée sur le conducteur toronné et
- la sonotrode introduit une vibration ultrasonore dans le conducteur toronné perpendiculairement à la normale à la surface de la pièce de connexion, le contre-palier vibrant par rapport à la sonotrode dans une direction de vibration parallèle à la direction de vibration de la sonotrode.
